# EUROPEAN PATENT APPLICATION

(11) **EP 4 852 441 A1**
(43) Date of publication of application: **09.12.2026**
(21) Application number: 25766870.7
(22) Date of filing: 22.04.2025
(51) Int. Cl.: H04N 23/695

(54) **CAMPING PHOTOGRAPHY METHOD AND SYSTEM, ELECTRONIC DEVICE, STORAGE MEDIUM, AND PROGRAM PRODUCT**

(71) Applicant: SZ Zhuoyu Technology Co., Ltd., Shenzhen, Guangdong 518055 (CN)
(72) Inventor: YANG, Freya, Shenzhen, Guangdong 518055 (CN)
(74) Representative: Hautier IP - MC/EP
(86) International application number: PCT/CN2025/090333
(87) International publication number: WO 2026/222619

(57) **Abstract**

A camping shooting method, a system, an electronic device, a storage medium, and a program product are disclosed in the present application. The method is applied to a camping shooting system including a vehicle, a drone shooting device, and a handheld shooting device. A vehicle-mounted terminal is installed in the vehicle, and the drone shooting device and the handheld shooting device are wirelessly connected to the vehicle-mounted terminal. The method comprises: controlling, by the vehicle-mounted terminal, the drone shooting device to launch and capture aerial imagery of a region, and receiving regional imagery; displaying, by the vehicle-mounted terminal, the regional imagery and based on the user's selected operation, and transmitting a Start Recording command containing a target campsite to both the drone shooting device and the handheld shooting device in response to a user's selection; and controlling the drone shooting device and the handheld shooting device to perform multi-node coordinated capture around the target campsite. The present application achieves automated multi-device shooting of the target campsite.

## Description

### TECHNICAL FIELD

The present application relates to the field of a camping shooting, and in particular to a camping shooting method, an electronic device, a storage medium, and a computer program product.

### BACKGROUND

In conventional implementations, concurrent operation of multiple shooting devices to capture the same subject necessitates individual manual control of each device, resulting in cumbersome procedures. For example, in vehicular camping scenarios where users attempt to document both the journey and campsite establishment while conducting diverse environmental shooting projects, they typically need to carry multiple independent shooting devices such as a drone shooting device, a handheld shooting device (e.g., an action camera, a gimbal camera), etc. To document the camping process from different perspectives, users must operate each device individually. For example, users need to first execute drone takeoff and manual flight positioning via the dedicated control terminal for aerial framing, while simultaneously deploying and continuously adjusting devices (such as a gimbal camera, an action camera) for optimal composition and perspective alignment at any time. This leads to problems such as cumbersome device management, limited shooting perspectives, and poor scene adaptability, accompanied by the functional fragmentation issues existing among these devices. However, in camping scenarios, users require instant readiness ("power-on-and-shoot" capability), rapid capture of transient moments, and support for diversified creative shooting modes.

### SUMMARY

Embodiments of the present application provide a camping shooting method, a system, an electronic device, a storage medium, and a computer program product, which are configured to address at least one of the aforementioned technical problems.

In a first aspect, embodiments of the present application provide a camping shooting method applied to a camping shooting system, the camping shooting system including a vehicle, a drone shooting device, and a handheld shooting device mounted on the vehicle, the vehicle being equipped with a vehicle-mounted terminal therein, and the drone shooting device and the handheld shooting device being wirelessly connected to the vehicle-mounted terminal, the method includes:
controlling, by the vehicle-mounted terminal, the drone shooting device to launch and capture aerial imagery of a region, and receiving regional imagery; displaying, by the vehicle-mounted terminal, the regional imagery and transmitting Start Recording command containing a target campsite to both the drone shooting device and the handheld shooting device in response to a user's selection; and controlling the drone shooting device and the handheld shooting device to perform multi-node coordinated capture around the target campsite.

In some embodiments, the method further includes: controlling the drone shooting device to fly into position and hover above the target campsite.

In some embodiments, imagery captured by the drone shooting device is designated as a first camping imagery, and imagery captured by the handheld shooting device is designated as a second camping imagery, and the method further includes: receiving, by the vehicle-mounted terminal, the first camping imagery transmitted by the drone shooting device and the second camping imagery transmitted by the handheld shooting device; and displaying, by the vehicle-mounted terminal, the first camping imagery and/or the second camping imagery.

In some embodiments, the camping shooting system further includes a mobile terminal, which is wirelessly connected to the vehicle-mounted terminal. The aforementioned method further includes:
receiving, by the vehicle-mounted terminal, the first camping imagery transmitted by the drone shooting device and the second camping imagery transmitted by the handheld shooting device; and
displaying, by the vehicle-mounted terminal, the first camping imagery and/or the second camping imagery.

In some embodiments, a display area of the vehicle-mounted terminal includes a primary display area and a secondary display area, and the step of displaying by the vehicle-mounted terminal the first camping imagery and/or the second camping imagery includes: displaying the first camping imagery in the primary display area, and displaying the second camping imagery in the secondary display area; or displaying the second camping imagery in the primary display area, and displaying the first camping imagery in the secondary display area.

In some embodiments, the aforementioned method further includes: transmitting by the vehicle-mounted terminal a Group Photo command containing a group photo subject to the drone shooting device, and controlling the drone shooting device to fly and capture a group photo of the user and the group photo subject in response to the Group Photo command.

In some embodiments, the aforementioned method further includes: displaying, by the vehicle-mounted terminal, the imagery captured by the drone shooting device; and determining the group photo subject based on the user's selection on the imagery.

In some embodiments, the group photo subject includes one or more of the following: the vehicle, a campsite tent, or a campsite canopy.

In some embodiments, the method further includes: outputting positioning prompt information by the vehicle-mounted terminal, wherein the positioning prompt information includes one or more of: voice prompt information, image prompt information, and text prompt information.

In some embodiments, the method further includes: controlling on-site lighting to provide fill-in lighting when insufficient ambient light is detected by the vehicle-mounted terminal or the drone shooting device.

In some embodiments, the step of controlling the on-site lighting to provide fill-in lighting when insufficient ambient light is sensed by the vehicle-mounted terminal or the drone shooting device includes: controlling, by the vehicle-mounted terminal, an onboard lighting on the vehicle to provide fill-in lighting; or controlling, by the drone shooting device, a fill light mounted on the drone shooting device to provide fill-in lighting.

In some embodiments, the method further includes: automatically generating, by the vehicle-mounted terminal, an edited video content based on visual materials captured by the drone shooting device and/or the handheld shooting device.

In some embodiments, while capturing the visual materials, the drone shooting device and the handheld shooting device record at least one of the following information: position information, weather information, and location information.

The step of automatically generating by the vehicle-mounted terminal the edited video content based on the visual materials captured by the drone shooting device and/or the handheld shooting device includes:

automatically generating the edited video content based on the visual materials captured by the drone shooting device and the handheld shooting device and at least one of the recorded information including position information, weather information, and location information.

In some embodiments, the step of automatically generating by the vehicle-mounted terminal an edited video content based on visual materials captured by the drone shooting device and/or the handheld shooting device includes: displaying, by the vehicle-mounted terminal, preset editing templates and/or editing styles; and editing, by the vehicle-mounted terminal, the visual material captured by the drone shooting device and/or handheld shooting device based on the selected target template and/or target style to automatically generate the edited video content.

In some embodiments, the step of displaying by the vehicle-mounted terminal the regional imagery and transmitting a Start Recording command containing a target campsite to both the drone shooting device and the handheld shooting device in response to a user's selection includes:
performing, by the vehicle-mounted terminal, image analysis on the regional imagery to determine recommended camping areas suitable for camping;
displaying, by the vehicle-mounted terminal, the regional imagery and marking the recommended camping areas in the regional imagery; and
determining, by the vehicle-mounted terminal, the target campsite based on the user's selection in the regional imagery and transmitting a Start Recording command to the drone shooting device, wherein the Start Recording command includes the target campsite.

In a second aspect, embodiments of the present application also provide a camping shooting system, the drone device camping shooting system includes a vehicle, a drone shooting device, and a handheld shooting device, the vehicle being equipped with a vehicle-mounted terminal therein, and the drone shooting device and handheld shooting device being wirelessly connected to the vehicle-mounted terminal.

The drone shooting device is configured to capture aerial imagery of a region and transmit the captured regional imagery to the vehicle-mounted terminal;

The vehicle-mounted terminal is configured to display the regional imagery and transmit a Start Recording command to the drone shooting device and the handheld shooting device based on the user's selection, in which the Start Recording command includes a target campsite.

The drone shooting device and handheld shooting device are further configured to perform multi-node coordinated capture around the target campsite.

In some embodiments, the drone shooting device is further configured to fly into position and hover above the target campsite.

In a third aspect, the embodiments of the present application provide an electronic device including: at least one processor; and a memory communicatively coupled to the at least one processor, the memory storing instructions executable by the at least one processor, and the instructions are executed by the at least one processor to enable the at least one processor to perform the steps of the camping shooting method of any embodiment of the present application.

In a fourth aspect, the embodiments of the present application also provide a computer-readable storage medium storing computer program/instructions, the computer program/instructions, when executed by a processor, implement the steps of a camping shooting method according to any embodiment of the present application.

In a fifth aspect, the embodiments of the present application also provide a computer program product including computer program instructions, the computer program instructions, when executed by a processor, implement the steps of the camping shooting method of any embodiment of the present application.

In the present application, the drone shooting device takes off from a landing pad to capture aerial imagery of a region and transmits the captured regional imagery to the vehicle-mounted terminal; the vehicle-mounted terminal displays the regional imagery and transmitted a Start Recording command containing a target campsite to both the drone shooting device and the handheld shooting device in response to a user's selection; then the drone shooting device and the handheld shooting device perform multi-node coordinated capture around the target campsite. The present application achieves automated multi-device shooting of the target campsite.

### BRIEF DESCRIPTION OF THE DRAWINGS

In order to more clearly illustrate the technical solutions of the embodiments of the present application, the accompanying drawings used in the description of the embodiments will be briefly described below. It is evident that the drawings in the following description represent only some of embodiments of the present application. One of ordinary skill in the art may derive other drawings from these drawings without creative labor.
FIG. 1 is a flowchart of a camping shooting method according to an embodiment of the present application;
FIG. 2 is a flowchart of a camping shooting method according to another embodiment of the present application;
FIG. 3 is a flowchart of a camping shooting method according to another embodiment of the present application;
FIG. 4 is a flowchart of a camping shooting method according to another embodiment of the present application;
FIG. 5 is a flowchart of a camping shooting method according to another embodiment of the present application;
FIG. 6 is a flowchart of a camping shooting method according to another embodiment of the present application;
FIG. 7 is a flowchart of a camping shooting method according to another embodiment of the present application; and
FIG. 8 is a structural schematic diagram of an electronic device according to an embodiment of the present application.

### DETAILED DESCRIPTION

In order to make the objects, technical solutions, and advantages of the embodiments of the present application clearer, the technical solutions of the embodiments of the present application will be described in detail below with reference to the accompanying drawings. It should be noted that the embodiments described are only part of the embodiments of the present application and not all of them. All other embodiments obtained by a person of ordinary skill in the art based on the embodiments without creative efforts shall fall within the scope of the present application.

It is to be noted that the embodiments and the features in the embodiments in the present application may be combined with each other in the absence of conflicts. It should also be noted that, in the present application, the terms "include" and "comprise" not only encompass the listed elements but also include other elements not explicitly listed, as well as elements that are inherent to such processes, methods, articles, or devices. Unless otherwise specified, an element defined by the phrase "comprises..." does not exclude the presence of additional identical elements in the process, method, article, or device that comprises the stated element.

The present application provides a camping shooting method that can be performed by an electronic device. The electronic device can be integrated into a mobile platform or be an independent mobile device. The mobile platform may include, but are not limited to, a vehicle, a boat, and a robot (including but not limited to bipedal robot, quadrupedal robot, tracked robot, and wheeled robot, etc.). The mobile devices may include, but are not limited to, a smartphone, a tablet computer, and a laptop computer, and the present applications is not limited thereto.

The following embodiments are illustrated using an electronic device integrated into a vehicle or a smartphone as examples, but they are equally applicable to an electronic device integrated into other mobile platform such as a robot or other mobile device, which is not limited in the present application.

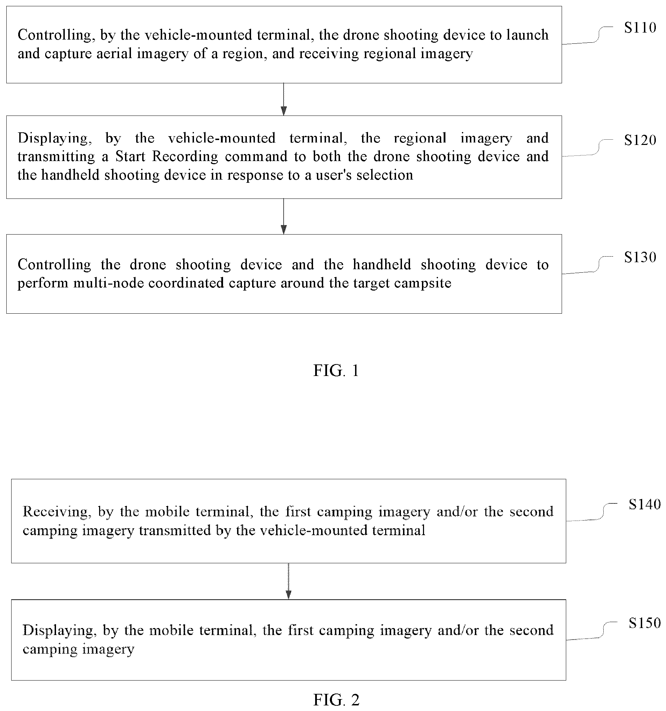

FIG. 1 shows a flowchart of a camping shooting method according to an embodiment of the present application. In this embodiment, the camping shooting method is applied to a camping shooting system including a vehicle, a drone shooting device, and a handheld shooting device. The handheld shooting device is mounted on the vehicle. A vehicle-mounted terminal is installed inside the vehicle. Both the drone shooting device and the handheld shooting device are wirelessly connected to the vehicle-mounted terminal. The method includes:

In S110, the vehicle-mounted terminal controls the drone shooting device to launch and capture aerial imagery of a region and receives regional imagery.

For example, the drone shooting device is an in-vehicle drone, the vehicle is equipped with a landing pad for drone docking. For instance, while the vehicle is in motion or stationary, the user may initiate a one-touch drone launch from the landing pad via the vehicle-mounted terminal's display screen (the flight destination may be configured as the vehicle's current navigation destination). The vehicle-mounted terminal controls the in-vehicle drone to launch from the vehicle's landing pad to capture regional imagery of the destination region and receives the transmitted regional imagery from the in-vehicle drone.

In S120, the vehicle-mounted terminal displays the regional imagery and transmits a Start Recording command containing the target campsite to both the drone shooting device and the handheld shooting device in response to the user's selection.

For example, the user selects the target campsite via a bounding-box operation on the display screen of the vehicle-mounted terminal. Upon detecting the bounding-box operation, the vehicle-mounted terminal automatically generates a Start Recording command and transmits it to the drone shooting device and handheld shooting device. The target campsite includes, but is not limited to, the campsite area suitable for camping that the user has selected via a bounding-box operation in the regional imagery.

In S130, the drone shooting device and handheld shooting device are controlled to perform multi-node coordinated capture around the target campsite. For example, imagery captured by the drone shooting device are recorded as the first camping imagery, and imagery captured by the handheld shooting device are recorded as the second camping imagery. The camping shooting method further includes: receiving, by the vehicle-mounted terminal, the first camping imagery transmitted by the drone shooting device and the second camping imagery transmitted by the handheld shooting device; and displaying, by the vehicle-mounted terminal, the first camping imagery and/or the second camping imagery.

The camping shooting method of this embodiment achieves unified management and control of both the drone shooting device and handheld shooting device through the vehicle-mounted terminal, enabling multi-terminal, multi-perspective capture of the target campsite.

In some embodiments, the camping shooting method further includes: controlling the drone shooting device to fly into position and hover above the target campsite. For example, after selecting a suitable camping area through the vehicle-mounted terminal, the user can further control the drone through the vehicle-mounted terminal to navigate to the airspace over the camping area and hover at a pre-set altitude (e.g., the pre-set altitude is 3 meters).

In this embodiment, after the user determines the campsite area to be selected, the drone shooting device is controlled to hover over the campsite area for positional marking, enabling the user to quickly locate the campsite area based on the drone's elevated position.

FIG. 2 illustrates a flowchart of the camping shooting method according to an embodiment of the present application. In this embodiment, the camping shooting system also includes a mobile terminal which is wirelessly connected to the vehicle-mounted terminal. The method further includes:

In S140, the mobile terminal receives the first camping imagery and/or the second camping imagery transmitted by the vehicle-mounted terminal. For example, the vehicle-mounted terminal can transmit the first camping imagery and the second camping imagery separately to the mobile terminal, or it can send the first camping imagery and the second camping imagery as a single integrated imagery to the mobile terminal, which is not limited in the present application.

In S150, the mobile terminal displays the first camping imagery and/or the second camping imagery. For example, the vehicle-mounted terminal synchronizes the imagery displayed on its screen to the display screen of the mobile terminal.

In this embodiment, the synchronization of the content displayed on the display screens of the mobile terminal and the vehicle-mounted terminal is realized, which allows users to observe and control the camping shooting situation of multiple terminal devices via a smartphone after leaving the vehicle.

In some embodiments, a display area of the vehicle-mounted terminal includes a primary display area and a secondary display area. The steps for the vehicle-mounted terminal displaying the imagery include: the vehicle-mounted terminal displays the first camping imagery and the second camping imagery in the primary display area and the secondary display area, respectively (at this time, the first camping imagery is the primary scene imagery, and the second camping imagery is the secondary scene imagery). Alternatively, the vehicle-mounted terminal displays the second camping imagery and the first camping imagery in the primary display area and the secondary display area respectively (at this time, the second camping imagery is the primary scene imagery, and the first camping scene is the secondary scene imagery). The primary scene imagery automatically switches between the imagery captured by the drone shooting device and the handheld shooting device as the shooting target changes.

The scene imagery captured by multiple shooting devices also change continuously over time (e.g., changes in ambient lighting, changes in people at the campsite, etc.). Additionally, the shooting perspectives of multiple shooting devices may also change (e.g., changes in the gimbal angle of the drone shooting device, changes in the hovering position of the drone shooting device, changes in the fixed position of the handheld shooting device, changes in the in-vehicle camera caused by changes in the vehicle, etc.), which will all lead to changes to the primary scene imagery. The vehicle-mounted terminal in the present application performs real-time analysis of scene imagery transmitted from multiple shooting devices and updates the primary scene imagery displayed on the display screen based on the analysis, accordingly.

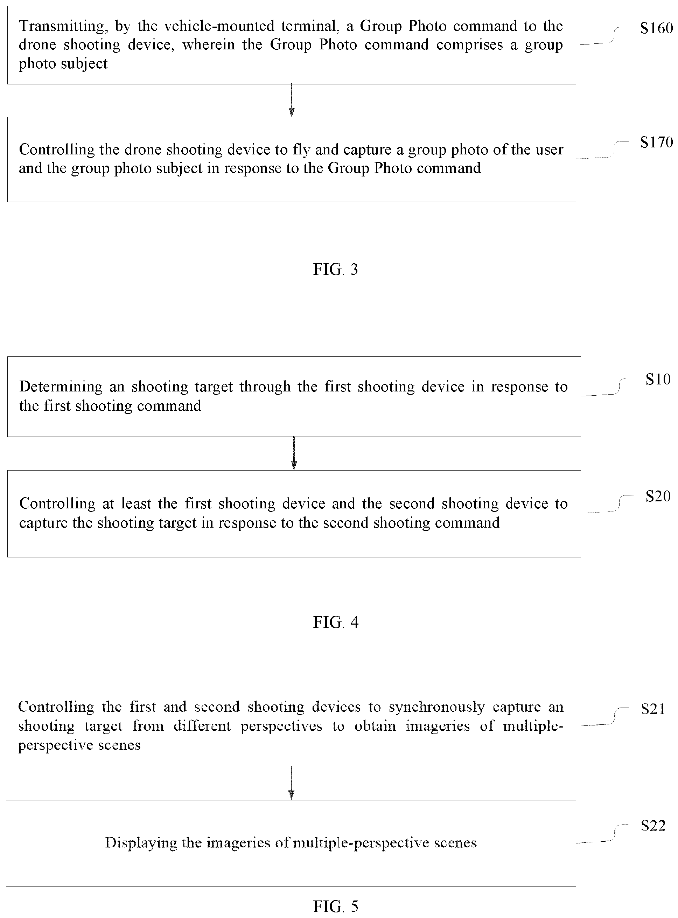

FIG. 3 illustrates a flowchart of the camping shooting method according to an embodiment of the present application. In this embodiment, the camping shooting method further includes:

In S160, the vehicle-mounted terminal transmits a Group Photo command (i.e., a Group Photo Mode trigger command) to the drone shooting device. The Group Photo command includes a group photo subject.

For example, the vehicle-mounted terminal displays the imagery captured by the drone shooting device and determines the group photo subject based on the user's selection on the imagery. The group photo subject includes one or more of the following: the vehicle, a campsite tent, or a campsite canopy.

In S170, the drone shooting device is controlled to fly and capture a group photo of the user and the group photo subject in response to the Group Photo command. For example, this step may include: determining the user's positioning based on the group photo subject and prompting the user; outputting, by the vehicle-mounted terminal, positioning prompt information, including one or more of: voice prompt information, image prompt information, and text prompt information.

For example, the step of determining the user's positioning based on the group photo subject and prompting the user includes: determining the user's positioning based on the group photo subject; and displaying the user's positioning on the mobile terminal's display interface to prompt the user. In this embodiment, when a group photo is requested, an appropriate user positioning can be automatically determined based on the group photo subject, and the user can be prompted. This ensures quick and accurate positioning of the user, resulting in a well-composed photo.

In some embodiments, the camping shooting method further includes: when the vehicle-mounted terminal or drone shooting device detects insufficient ambient light, controlling the on-site lighting to provide fill-in lighting. For example, the step of controlling the on-site lighting to provide fill-in lighting when the vehicle-mounted terminal or drone shooting device detects insufficient ambient light includes: controlling, by the vehicle-mounted terminal, an onboard lighting on the vehicle to provide fill-in lighting; or controlling, by the drone shooting device, a fill light mounted on the drone shooting device to provide fill-in lighting.

In this embodiment, a dynamic adaptive lighting network for camping activities and shooting can be established by integrating the vehicle's built-in lighting system (i.e., onboard lighting system) with the drone's auxiliary lighting system, which solves the problem of shooting quality degradation caused by insufficient or uneven natural lighting in camping scenarios. At the same time, it also expands the functional boundaries of vehicles in outdoor scenarios. This functionality is typically applied in, for example, nighttime campfire portrait scenarios, where the drone detects that the current environment is illuminated solely by campfire light with low luminous intensity. When the user activates any device of the shooting system for shooting, the drone descends to an altitude of 2 meters (calibrated value) and activates ring-shaped soft lighting, while the vehicle's headlights switch to diffuse reflection mode to provide background lighting., and such a coordinated lighting ensures accurate facial exposure of the subject.

In some embodiments, the method further includes: automatically generating, by the vehicle-mounted terminal, edited video content based on the visual materials captured by the drone shooting device and/or the handheld shooting device. For example, the edited video content is automatically generated based on at least the visual materials captured by the first shooting device (e.g., the drone shooting device) and the second shooting device (e.g., the handheld shooting device).

In some embodiments, while capturing the visual materials, the drone shooting device and handheld shooting device record at least one of the following information: position information, weather information, and location information.

The step of automatically generating the edited video content by the vehicle-mounted terminal based on the visual materials captured by the drone shooting device and/or handheld shooting device includes:

automatically generating, by the vehicle-mounted terminal, the edited video content based on the visual material captured by the drone shooting device and/or handheld shooting device, as well as at least one of the recorded information including position information, weather information, and location information.

In some embodiments, the step of automatically generating the edited video content by the vehicle-mounted terminal based on the visual material captured by the drone shooting device and/or handheld shooting device includes:
displaying, by the vehicle-mounted terminal, preset editing templates and/or editing styles;
editing, by the vehicle-mounted terminal, the visual material captured by the drone shooting device and/or handheld shooting device based on the selected target template and/or target style to automatically generate the edited video content.

In this embodiment, the user can first select the editing module on the vehicle-mounted terminal or the mobile terminal, and then the edited video content is automatically generated according to the selected editing module. For example, this embodiment obtains vehicle traveling data, campsite geographic location, weather, place, and other information, and uniformly integrates the visual materials generated in camping mode. It also provides scenario-specific one-click video generation templates, such as Vlog Template (complete narrative structure (Introduction-Rising Action-Climax-Conclusion)), Short-form Video Template (highlight-forward editing), and Annual Memory Template (montage splicing). By transforming the materials into emotionally contextualized visual narratives, the solution significantly lowers the technical barrier for outdoor content creation.

In some embodiments, the vehicle-mounted terminal displays the regional imagery and transmits a Start Recording command containing the target campsite to both the drone shooting device and handheld shooting device based on the user's selection, including the followings.

The vehicle-mounted terminal performs image analysis on the regional imagery to determine recommended camping areas suitable for camping; the vehicle-mounted terminal displays the regional imagery and marks the recommended camping areas in the regional imagery; the vehicle-mounted terminal determines the target campsite based on the user's selected in the regional imagery and transmits a Start Recording command including the target campsite to the drone shooting device.

In the second aspect, embodiments of the present application also provide a camping shooting system, including a vehicle, a drone shooting device, and a handheld shooting device. The vehicle is equipped with a vehicle-mounted terminal therein, which is wirelessly connected to both the drone shooting device and the handheld shooting device.

The drone shooting device is configured to capture regional imagery of a region and transmit the captured regional imagery to the vehicle-mounted terminal; the vehicle-mounted terminal is configured to display the regional imagery and transmit a Start Recording command containing the target campsite to the drone shooting device and the handheld shooting device based on the user's selection; the drone shooting device and the handheld shooting device are also configured to perform multi-node coordinated capture around the target campsite.

In some embodiments, the drone shooting device is further configured to fly into position and hover above the target campsite.

The embodiments of the present application provide a camping shooting method executed by a vehicle-integrated electronic device and/or smartphone. The multiple shooting devices include a first shooting device and a second shooting device.

For example, the first shooting device includes at least one shooting device such as a drone shooting device, a handheld shooting device (e.g., an action camera, a gimbal camera), or an in-vehicle camera. The number of first shooting devices can be at least one and is not limited to one type of shooting device (e.g., the first shooting device may include one drone shooting device; the first shooting device may include two drone shooting devices; or the first shooting device may include one drone shooting device and one handheld shooting device).

For example, the second shooting device includes at least one of the following: a drone shooting device, a handheld shooting device (e.g., an action camera, a gimbal camera), or an in-vehicle camera. The number of second shooting devices can be at least one and is not limited to a one type of shooting device (e.g., the second shooting device may include one drone shooting device; the second shooting device may include two drone shooting devices; the second shooting device may include one drone shooting device and one handheld shooting device; or the second shooting device may include one handheld shooting device and one in-vehicle camera).

FIG. 4 illustrates a flowchart of the camping shooting method according to an embodiment of the present application. In this embodiment, the camping shooting method includes:

In S10, determining a shooting target through the first shooting device in response to the first shooting command.

For example, the first shooting command may be a "one-click camping record" command triggered by the user on a vehicle-mounted terminal (e.g., an electronic device integrated into the vehicle) or a mobile terminal (e.g., a smartphone). The triggering form may be touch, gesture, or voice, etc., which is not limited in the present application.

By way of example, this embodiment is described assuming a vehicle-mounted terminal, the first shooting device being one drone shooting device, and the second shooting device being one handheld shooting device and one in-vehicle camera. The vehicle-mounted terminal is equipped with a drone domain controller, a drone SDK, and a handheld device SDK, and the vehicle-mounted terminal is connected to the drone shooting device, the handheld shooting device, and the in-vehicle camera. The vehicle-mounted terminal receives the imagery captured by the drone shooting device, the handheld shooting device, and the in-vehicle camera through the communication connection, and displays them on the vehicle-mounted terminal's display screen.

In some embodiments, the step of determining the shooting target using the first shooting device includes: capturing scene imagery via the first shooting device; and determining the shooting target in response to a selection operation performed in the scene imagery. In this embodiment, when the first shooting device includes the drone shooting device, the step of capturing scene imagery via the first shooting device includes: controlling the drone shooting device to fly to a preset position to capture the scene imagery; and receiving the captured scene imagery from the drone shooting device.

For example, upon the user's triggering the "One-Click Camping Record" command on the vehicle-mounted terminal, the vehicle-mounted terminal scans for nearby enabled shooting devices (such as a drone shooting device, a handheld shooting device, etc.) and establishes a connection with them.

Then, the drone shooting device takes off, ascends to the designated hovering altitude (for example, 3 meters) above the camping site, and begins recording toward the camping site. Meanwhile, the user can secure the handheld shooting device to a vehicle body such as the trunk via a magnetic mount and orient it toward the camping site for synchronized recording.

Furthermore, the vehicle-mounted terminal receives the real-time image feed (including imagery) from the drone shooting device and displays it on its screen. The user frames an anticipated camping activity range on the image feed. The vehicle-mounted terminal then transmits the framed range to both the drone shooting device and the handheld shooting device, and determines a shooting target based on the framed range, thus these devices autonomously adjust their shooting trajectories to track the shooting target. The framed range can be a designated area on the campsite, specific individuals or objects within the campsite, or structures such as tents, among others, which is not limited in the present application.

In S20, in response to the second shooting command, controlling at least the first shooting device and the second shooting device to capture the shooting target.

For example, the second shooting command may be a "Start Camping Recording" command triggered by the user on the vehicle-mounted terminal (e.g., an electronic device integrated into the vehicle) or a mobile terminal (e.g., a smartphone). The triggering form may be a touch form, a gesture form, or a voice form, etc., and which is not limited in the present application. The second shooting command may also be automatically triggered by the vehicle-mounted terminal upon detecting a tent unfolding action through images captured by the first shooting device or the second shooting device.

For example, the vehicle-mounted terminal controls the drone shooting device, the handheld shooting device, and in-vehicle camera in responding to the "Start Camping Recording" command to simultaneously capture the shooting target.

In the embodiments of the present application, the user only needs to determine a shooting target through the first shooting device on the vehicle-mounted terminal or mobile terminal, and then the first shooting device and the second shooting device are automatically controlled to capture the shooting target. The user does not need to operate the first shooting device and the second shooting device separately to achieve capturing of the same shooting target by both devices, thereby achieving unified management of multiple shooting devices and simplifying the user's operation of controlling multiple shooting devices.

FIG. 5 shows a flowchart of the camping shooting method according to another embodiment of the present application. In this embodiment, controlling at least the first shooting device and the second shooting device to capture the target includes:

In S21, controlling the first and second shooting devices to synchronously capture a shooting target from different perspectives to obtain multiple-perspective scene imagery.

For illustrative purposes, this embodiment adopts a vehicle-mounted terminal (or mobile terminal), the first shooting device including one drone shooting device, and the second shooting device including one handheld shooting device and one in-vehicle camera. The vehicle-mounted terminal (or mobile terminal) controls the drone shooting device, the handheld shooting device, and the in-vehicle camera to simultaneously capture the target from distinct perspectives. The drone captures the target from the air to obtain an aerial panorama imagery, the handheld shooting device captures the target from the user's first-person perspective (or from a fixed mounting perspective when secured in a stationary position), and the in-vehicle camera captures the target from the vehicle's perspective.

In S22, displaying the multiple-perspective scene imagery.

For example, the drone shooting device, handheld shooting device, and in-vehicle camera transmit the imagery of multiple perspective scenes obtained by capturing the target from distinct perspectives simultaneously) to the vehicle-mounted terminal (or mobile terminal) via a communication connection with the vehicle-mounted terminal (or mobile terminal). The vehicle-mounted terminal (or mobile terminal) receives and displays the imagery on its display screen.

In the embodiments of the present application, by transmitting imagery of multiple scenes captured in real time from distinct perspectives by multiple shooting devices to a single vehicle-mounted terminal (or mobile terminal) and displaying them on the display screen simultaneously, it is convenient for users to view imagery of multiple scenes captured by multiple shooting devices at any time on the same device.

In some embodiments, the imagery of multiple scenes from multiple perspectives can be distributed in a matrix format on the display screen. Alternatively, one of the scene imagery from multiple perspectives can be designated as primary scene imagery, and the others as secondary scene imagery. The size of the primary scene imagery can be set larger than that of the secondary scene imagery, and the primary scene imagery can be displayed at the center of the display screen to allow users to observe it more clearly.

The determination of the primary scene imagery can be made by the vehicle-mounted terminal after analyzing and processing the scene imagery transmitted back by multiple shooting devices (for example, it can be determined according to conditions such as the image quality of the scene imagery, whether the scene imagery contains target persons, or whether the imagery contains multiple shooting objects, etc.), or it can be manually specified by the user on the display screen of the vehicle-mounted terminal. The present application does not limit the specific implementation method for determining the primary scene imagery.

In some embodiments, the scene imagery from multiple perspectives includes primary scene imagery and secondary scene imagery. The primary scene imagery automatically switches between the scene imagery captured by the first and second shooting devices as the shooting target changes.

For example, the vehicle-mounted terminal analyzes and processes the scene imagery transmitted back by the first and second shooting devices to determine the primary scene imagery and the secondary scene imagery. For example, criteria for qualifying as the primary scene imagery include, but are not limited to at least one of: the image quality of the imagery meeting preset thresholds (e.g., luminance is higher than the preset luminance threshold, contrast ratio is greater than the facility contrast ratio threshold, etc.), presence of a target person (e.g., the target person specified by the user through the display screen of the vehicle-mounted terminal), and inclusion of multiple shooting objects (this ensures the richness of the content of the primary scene image).

The scene imagery captured by multiple shooting devices are constantly changing over time (e.g., changes in ambient lighting, changes in people at the campsite, etc.). In addition, the shooting positions of multiple shooting devices may also change (e.g., changes in the gimbal angle of a drone shooting device, changes in the hovering position of a drone shooting device, changes in the fixed position of a handheld shooting device, changes in the in-vehicle camera caused by changes in the vehicle, etc.), which will all lead to changes in the primary scene imagery. The vehicle-mounted terminal in the present application can make determination in real-time according to the scene imagery transmitted back by multiple shooting devices and update the primary scene imagery displayed on the display screen.

By way of example, when a user pitches a tent at the campsite, the method described above identifies the tent pitching individual as meeting the criteria for a primary scene imagery, thereby enabling continuous subject tracking. During tent pitching process, a camera position can be automatically switched by tracking the user's movement to document the complete process from different perspectives.

In some embodiments, the drone shooting device uses the selected campsite area by bounding-box selection as the target subject to follow, while the user secures the handheld camera to the vehicle body such as the trunk. The handheld shooting device automatically activates facial recognition tracking, captures the face, and automatically starts recording person's activities near the vehicle body such as the trunk (close-up framing). Additionally, after the drone takes off and reaches its designated hovering position, it detects changes in the selected campsite area. If a person or other objects appear in the area, the start of recording is automatically triggered. Meanwhile, the drone will automatically switch shooting positions based on the subjects' movement trajectories (usually combined with preprogrammed cinematographic maneuvers such as dollying out, ascending, orbiting, and trucking in, etc.).

In the aforementioned embodiments of the present application, upon user activation of a "One-Click Camping Record" command via the vehicle-mounted terminal or mobile terminal, the drone takes off and hovers at a designated altitude (if the drone has already taken off, it directly goes to the initial position). The user can frame an anticipated camping range on image feed from the drone. At this time, the drone tracks framed range as its primary target. At the same time, the user can secure the handheld shooting device to a vehicle body such as the trunk via a magnetic mount. The "Start Camping Record" command can be initiated via the vehicle-mounted terminal control or voice input. Alternatively, the start of recording can be automatically triggered upon detecting tent unfolding action. Camera positions can also be automatically adjusted based on the user's movement trajectory, enabling concurrent recording of the campsite setup process from spatially distributed cameras at varied angles. During this process, corresponding image feed from all connected and active devices are provided, which allows users to simultaneously manage the imagery from the in-vehicle camera, drone, and handheld device, thereby realizing multi-perspectives collaborative shooting.

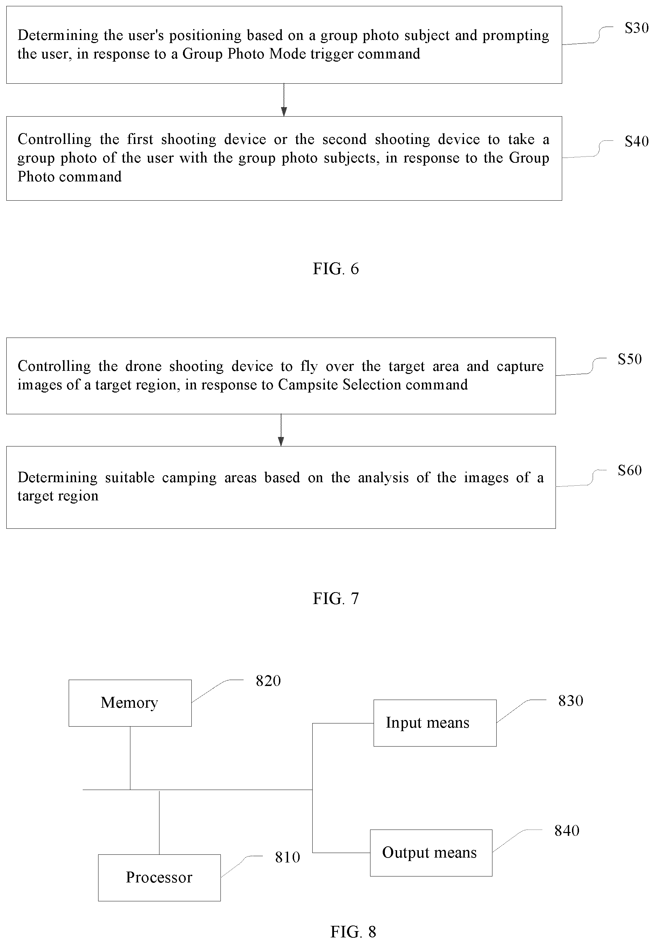

FIG. 6 shows a flowchart of the camping shooting method according to other embodiments of the present application. In this embodiment, the camping shooting method further includes:

In S30, determining the user's positioning based on a group photo subject in response to a Group Photo Mode trigger command, and prompting the user.

For example, the user triggers the "Group Photo Mode" command on the vehicle-mounted terminal. At this time, the vehicle-mounted terminal can synchronize the operation interface to the mobile terminal. This allows the user to leave the vehicle, hold the mobile terminal to continue operating and controlling multiple shooting devices while viewing the scene imagery captured from different perspectives by these devices. In some embodiments, the group photo subject (e.g., a vehicle, a tent or a canopy in the campsite-either individually or in combination) may be a preset subject in the vehicle-mounted terminal.

For example, the step of determining the user's positioning based on the group photo subject and prompting the user includes: determining the user's positioning based on the group photo subject; and displaying the user's positioning on the second display screen of the mobile terminal to prompt the user. The second display screen of the mobile terminal displays live scene imagery captured by the first or second shooting device. The user's positioning is marked on the live scene imagery.

In some embodiments, the vehicle-mounted terminal can configure user positionings in advance for different group photo subjects (i.e., the composition of the image obtained when the user takes a group photo with the group photo subjects at such positioning is relatively reasonable). When the group photo subjects are determined, the corresponding user positioning can be obtained from the vehicle-mounted terminal. The user positioning is then displayed on the second display screen of the mobile terminal to prompt the user of the position to stand. Multiple user positionings can be configured in advance for the same group photo subject and displayed on the second display screen simultaneously for user's selection.

In S40, controlling the first shooting device or the second shooting device in response to the Group Photo command to take a group photo of the user with the group photo subjects. For example, the Group Photo command can be triggered by the user through the mobile terminal. The triggering forms include but are not limited to touch, button press, voice, and gestures.

In this embodiment, when a group photo is to be taken, an appropriate user positioning can be automatically determined based on the group photo subjects, and the user can be prompted. This ensures quick and accurate positioning of the user, resulting in a well-composed photo.

Additionally, by synchronizing the vehicle-mounted terminal's operating interface to the mobile terminal, it is convenient for users to preview the group photo in real-time outside the vehicle. For example, synchronizing the vehicle-mounted terminal operation interface to the mobile terminal includes but is not limited to the following two solutions:
Solution 1: Retain control on the vehicle-mounted terminal, with the mobile terminal only serving as a screen mirroring display for the image feed;
Solution 2: After triggering the human-vehicle group photo function, the vehicle-mounted terminal transmits a command to silence the in-vehicle image feed module while activating the vehicle remote controller's software-defined radio (SDR) link via a Bluetooth. Then, the user must establish a connection between the mobile device and the vehicle remote controller to proceed, at which point operational control is handed over to the mobile device.

In some embodiments, the group photo subjects may be selected by the user, examples of which are as follows:
Before performing the step S30, the camping shooting method further includes: determining a target group photo subject in response to the user's selection operation on the first display interface of the mobile terminal. By way of example, the first display interface displays scene imagery from the first shooting device and the second shooting device. For instance, when the first shooting device includes one drone shooting device, and the second shooting device includes one handheld shooting device and one in-vehicle camera, the corresponding first display interface displays three scene imagery. The user may select any one of these scene imagery to complete the group photo.

For example, if the user selects the scene imagery from the drone shooting device, then the drone shooting device will perform the group photo shooting. Furthermore, when the user selects the scene imagery from the drone shooting device, the scene imagery from the drone shooting device will be displayed full-screen on the vehicle-mounted terminal's screen and/or mobile terminal's screen. The user can continue to select the group photo subjects from the scene imagery from the drone shooting device. The group photo subjects include but are not limited to one or more of the following: a vehicle in the campsite, a tent in the campsite, or a canopy in the campsite. In this implementation, the group photo subject can be determined based on user selection (e.g., users frame the desired subjects in the scene imagery), thereby fulfilling personalized group photo requirements.

In some embodiments, the first shooting device is a drone shooting device, and the subject of the group photo is a vehicle. The vehicle-mounted terminal can pre-store multiple fixed drone positions relative to the vehicle. Correspondingly, one or more user positionings (i.e., recommended locations for users to appear) are configured for each drone position. In this embodiment, after the user triggers the "Group Photo Mode" command, the vehicle-mounted terminal interface can be transferred to a mobile terminal for off-vehicle operation. In this mode, the vehicle-mounted terminal recommends optimal positionings to the users for each fixed drone position.

Further, the drone can adjust aesthetic composition based on the current positional relationship between people and vehicle and based on the scenic features. During photo-taking interaction, the user can also take photos via a countdown shooting or by using the external voice command capability (when ready), which is not limited in the present application.

In some embodiments, the camping shooting method further includes: when the first shooting device and/or the second shooting device detects that the current ambient light is insufficient, controlling the on-site lighting to provide fill-in lighting.

By way of example and not limitation, this embodiment is described with: a vehicle-mounted terminal (or mobile terminal), a first shooting device consisting of one drone shooting device, a second shooting device incorporating both one handheld shooting device, and one in-vehicle camera. The vehicle-mounted terminal (or mobile terminal) communicates with the drone shooting device, the handheld shooting device, and the in-vehicle camera and to perform the camping shooting method.

In some embodiments, the first shooting device includes a drone shooting device equipped with a light source. The on-site lighting also includes onboard lighting. The step of controlling the on-site lighting to provide fill-in lighting includes controlling the drone shooting device and/or the onboard lighting to provide fill-in lighting.

In this embodiment, a dynamic adaptive lighting network for camping activities and shooting can be established by integrating the vehicle's built-in lighting system (i.e., onboard lighting system) with the drone's auxiliary lighting system, which solves the problem of shooting quality degradation caused by insufficient or uneven natural lighting in camping scenarios. This functionality also expands the functional boundaries of vehicles in outdoor scenarios. Typical application scenarios include nighttime campfire portrait shooting, where the drone detects that the current environment is illuminated solely by campfire light with low luminous intensity. When the user activates any device of the shooting system for shooting, the drone descends to an altitude of 2 meters (calibrated value) and activates ring-shaped soft lighting. Meanwhile, the vehicle's headlights switch to diffuse reflection mode to provide background lighting. Such coordinated lighting ensures accurate facial exposure of the subject.

In some implementations, another fill-in lighting scenario and a possible solution are as follows: when the user uses a handheld shooting device for framing, if the ambient light brightness (detected by the handheld device's light sensor) is lower than preset brightness threshold, a Fill-in Lighting command is instructed to the drone (the key lies in the drone's identification of the subject, the corresponding altitude adjustment, and the way of fill-in lighting). The fill-in lighting parameters are defined by an algorithm. Generally, the algorithm needs to combine empirical values (e.g., Rembrandt lighting effect is generally used for portrait fill-in lighting, with a main light angle of 45°±5°; a butterfly lighting layout is generally used for scene fill-in lighting, with an altitude ratio of 1:1.618) to send the corresponding parameters to the drone's domain controller. Upon receiving the parameters, the drone activates its onboard LED lights and flies to the corresponding position.

In some embodiments, an edited video content is automatically generated at least based on visual materials captured by the first and second shooting devices.

The above embodiment is described by taking a vehicle-mounted terminal (or mobile terminal), a first shooting device consisting of one drone shooting device, a second shooting device incorporating both one handheld shooting device, and one in-vehicle camera as an example. The vehicle-mounted terminal can automatically generate edited video content from the video materials of the campsite captured by the drone shooting device, the handheld shooting device, and the in-vehicle camera.

In some embodiments, the camping shooting method further includes: recording at least one of position information, weather information, and location information while capturing visual materials by the first shooting device and the second shooting device; automatically generating edited video content based on at least the visual materials captured by the first shooting device and the second shooting device, which includes: automatically generating the edited video content based on the visual materials captured by the first shooting device and the second shooting device and at least one of the recorded information including position information, weather information, and location information .

In this embodiment, the first and second shooting devices also record at least one of the position information, weather information, and location information while capturing the visual materials. Consequently, during automated generation of edited video content, the recorded position information, weather information, and location information can be synthesized to produce situationally appropriate content that authentically replicates the camping experience.

In some embodiments, the step of automatically generating the edited video content based on the visual materials captured by the first shooting device and the second shooting device and at least one of the recorded information including position information, weather information, and location information includes: based on a user-selected editing template, automatically generating the edited video content according to the visual materials captured by the first and second shooting devices and at least one of the recorded position information, weather information, and location information.

FIG. 7 illustrates a flowchart diagram of the camping shooting method according to an alternative embodiment of the present application. In this embodiment, the first terminal device includes a drone shooting device. The camping shooting method further includes:

In S50, in response to a Campsite Selection command (for example, it is triggered by the user via the vehicle-mounted terminal), controlling the drone shooting device to fly over the target area and capture images of a target region. For example, when the vehicle approaches within 500 meters (calibrated value) of the navigation destination, the user may activate Camping Mode via the vehicle-mounted terminal and trigger the "Campsite Selection by One-Click" function. Then the drone shooting device will dynamically take off during vehicle movement, and fly to the airspace above the navigation destination to perform a circular scanning pattern at altitude of 50 meters.

In S60, determining suitable camping areas based on the analysis of the images of the target region.

For example, the drone shooting device analyzes the scene imagery obtained through scanning. If an area suitable for camping is determined (based on environmental factors such as the absence of other objects and terrain flatness), the drone shooting device will return a corresponding scene imagery to the vehicle-mounted terminal. The present application does not limit the specific implementation method for identifying suitable camping areas.

In some embodiments, the camping shooting method further includes: in response to the user's confirmation operation to the camping area, controlling the drone shooting device to hover above the camping area.

In this embodiment, after the user determines the camping area to be selected, the drone shooting device is controlled to hover above the camping area, enabling the user to quickly locate the camping area based on the drone shooting device's hovering position.

In some embodiments, embodiments of the present application further provide an electronic device including: at least one processor; and a memory communicatively coupled to the at least one processor, where the memory stores instructions executable by the at least one processor, the instructions being executed by the at least one processor to enable the at least one processor to perform the steps of the camping shooting method of any embodiment of the present application.

In some embodiments, embodiments of the present application also provide a computer-readable storage medium storing computer program/instructions thereon, the computer program/instructions, when executed by a processor, performs the steps of the camping shooting method of any embodiment of the present application.

In some embodiments, embodiments of the present application also provide a computer program product including computer programs/instructions which, when being executed by a processor, implement the steps of the camping shooting method of any embodiment of the present application.

FIG. 8 is a schematic diagram of a hardware structure of an electronic device for performing a camping shooting method provided in another embodiment of the present application. As shown in FIG. 8, the device includes:
one or more processors 810 and a memory 820, in which one processor 810 is taken as an example in FIG. 8.

The device for performing the camping shooting method may further include: an input means 830 and an output means 840.

Processor 810, memory 820, input means 830, and output means 840 may be connected via a bus or other ways, while the connection via a bus is taken as an example in FIG. 8.

Memory 820, which is a non-volatile computer-readable storage medium, may be used to store non-volatile software programs, non-volatile computer-executable programs, and modules, such as the program instructions/modules corresponding to the camping shooting method described in the embodiments of the present application. Processor 810 executes various functional applications and data processing of the server by running the non-volatile software programs, instructions, and modules stored in memory 820, thereby implementing the camping shooting method in the embodiments described above.

The memory 820 may include a program storage area and a data storage area. The program storage area may store an operating system and at least one application required for a function. The data storage area may store data generated through the use of the device for controlling multiple shooting devices, etc. Additionally, memory 820 may include high-speed random access memory and may also include non-volatile memory, such as at least one disk storage device, a flash memory device, or other non-volatile solid state memory device. In some embodiments, memory 820 may optionally include memory that is remotely located relative to processor 810, and such remote memory may be connected to the device for controlling multiple shooting devices via a network. Examples of such networks include, but are not limited to, the Internet, an enterprise intranet, a local area network, a mobile communication network, and combinations thereof.

The input means 830 may receive input numerical or character information and generate signals related to user settings and functional controls of the device for controlling the multi-shooting device. The output means 840 may include display devices such as a display screen.

One or more modules are stored in memory 820, and when being executed by one or more processors 810, perform the camping shooting method of any of the above method embodiments.

The above product can execute the method provided by the embodiments of the present application, and has the corresponding functional modules and beneficial effects of executing the method. Technical details not described in detail in the present embodiments may be referred to in the methods provided by the embodiments of the present application.

The computer device in the embodiments of the present application may exist in various forms, including but not limited to:
(1) Mobile communication devices: these devices are characterized by having mobile communication functions and are mainly aimed at providing voice and data communication. These terminals include smartphones (e.g., iPhone), multimedia phones, feature phones, and entry-level phones, etc.
(2) Ultra-mobile personal computer devices: these devices fall under the category of personal computers, with computing and processing capabilities, and generally also have mobile internet access features. Such terminals include PDAs, MIDs, UMPC devices, etc., for example, iPad.
(3) Portable entertainment devices: these devices can display and play multimedia content. Examples include: audio and video players (such as iPods), handheld gaming consoles, e-readers, smart toys, and portable car navigation systems.
(4) Servers: devices that provide computing services. The configuration of a server includes a processor, hard disk, memory, system bus, etc. Servers are similar to general computer architectures but have higher requirements in processing power, stability, reliability, security, scalability, and manageability due to the need to provide high-reliability services.
(5) Other electronic devices with data interaction functions.

The device embodiments described above are merely illustrative. The units described as separate components may or may not be physically separated, and the components shown as units may or may not be physical units-that is, they may reside in a single location or be distributed across multiple network units. Depending on practical requirements, some or all the modules may be selected to achieve the objectives of this embodiment.

From the description of the above embodiments, those skilled in the art can clearly understand that each embodiment can be implemented using a combination of software and general-purpose hardware platforms, and of course, can also be implemented by hardware. Based on such understanding, the essence of the above technical solutions or the parts that contribute to the related technology can be embodied in the form of a software product. The computer software product can be stored in a computer-readable storage medium, such as ROM/RAM, magnetic disk, optical disk, etc., and includes several instructions to cause a computer device (which may be a personal computer, server, network device, etc.) to execute the method described in the embodiments or portions thereof.

Finally, it should be noted that the above embodiments are provided solely to illustrate the technical solutions of the present application and are not intended to limit the scope of the present application. Although the present application has been described in detail with reference to the foregoing embodiments, a person of ordinary skill will understand that it is still possible to modify the technical solutions described in the foregoing embodiments or replace some technical features with equivalent alternatives without departing from the spirit and scope of the technical solutions of the present application.

## Claims

1. A camping shooting method applied to a camping shooting system, the camping shooting system comprising a vehicle, a drone shooting device, and a handheld shooting device; the vehicle being equipped with a vehicle-mounted terminal therein, and both the drone shooting device and the handheld shooting device being wirelessly connected to the vehicle-mounted terminal; the method comprises:
controlling, by the vehicle-mounted terminal, the drone shooting device to launch and capture aerial imagery of a region, and receiving regional imagery;
displaying, by the vehicle-mounted terminal, the regional imagery and transmitting a Start Recording command containing a target campsite to both the drone shooting device and the handheld shooting device in response to a user's selection; and
controlling the drone shooting device and the handheld shooting device to perform multi-node coordinated capture around the target campsite.

2. The method according to claim 1, further comprising: controlling the drone shooting device to fly into position and hover above the target campsite.

3. The method according to claim 1, wherein imagery captured by the drone shooting device are designated as first camping imagery, and imagery captured by the handheld shooting device are designated as second camping imagery, and the method further comprises:
receiving, by the vehicle-mounted terminal, the first camping imagery transmitted by the drone shooting device and the second camping imagery transmitted by the handheld shooting device; and
displaying, by the vehicle-mounted terminal, the first camping imagery and/or the second camping imagery.

4. The method according to claim 3, wherein the camping shooting system further comprises a mobile terminal being wirelessly connected to the vehicle-mounted terminal, and the method further comprises:
receiving, by the mobile terminal, the first camping imagery and/or the second camping imagery transmitted by the vehicle-mounted terminal; and
displaying, by the mobile terminal, the first camping imagery and/or the second camping imagery.

5. The method according to claim 3, wherein a display area of the vehicle-mounted terminal comprises a primary display area and a secondary display area, and displaying, by the vehicle-mounted terminal the first camping imagery and/or the second camping imagery comprises:
displaying the first camping imagery in the primary display area, and displaying the second camping imagery in the secondary display area; or
displaying the second camping imagery in the primary display area, and displaying the first camping imagery in the secondary display area.

6. The method according to claim 1, further comprising:
transmitting, by the vehicle-mounted terminal, a Group Photo command to the drone shooting device, wherein the Group Photo command comprises a group photo subject; and
controlling the drone shooting device to fly and capture a group photo of the user and the group photo subject in response to the Group Photo command.

7. The method according to claim 6, further comprising:
displaying, by the vehicle-mounted terminal, imagery captured by the drone shooting device; and
determining the group photo subject based on a user's selection on the imagery.

8. The method according to claim 6, wherein the group photo subject comprises one or more of the following: the vehicle, a campsite tent, or a campsite canopy.

9. The method according to claim 6, further comprising: outputting, by the vehicle-mounted terminal, positioning prompt information, wherein the positioning prompt information comprises one or more of: voice prompt information, image prompt information, and text prompt information.

10. The method according to claim 1, further comprising: controlling on-site lighting to provide fill-in lighting when insufficient ambient light is detected by the vehicle-mounted terminal or the drone shooting device.

11. The method according to claim 10, wherein controlling on-site lighting to provide fill-in lighting when insufficient ambient light is detected by the vehicle-mounted terminal or the drone shooting device comprises:
controlling, by the vehicle-mounted terminal, an onboard lighting on the vehicle to provide fill-in lighting; or
controlling, by the drone shooting device, a fill light mounted on the drone shooting device to provide fill-in lighting.

12. The method according to claim 2, further comprising: automatically generating, by the vehicle-mounted terminal, an edited video content based on visual materials captured by the drone shooting device and/or the handheld shooting device.

13. The method according to claim 12, wherein the drone shooting device and the handheld shooting device record at least one of the following information while capturing the visual materials: position information, weather information, or location information; and
wherein automatically generating the edited video content by the vehicle-mounted terminal based on the visual materials captured by the drone shooting device and/or the handheld shooting device comprises:
automatically generating the edited video content based on the visual materials captured by the drone shooting device and the handheld shooting device and at least one of the recorded information including: position information, weather information, and location information.

14. The method according to claim 12, wherein automatically generating an edited video content by the vehicle-mounted terminal based on visual materials captured by the drone shooting device and/or the handheld shooting device comprises:
displaying, by the vehicle-mounted terminal, preset editing templates and/or editing styles; and
editing, by the vehicle-mounted terminal, the visual material captured by the drone shooting device and/or handheld shooting device based on the selected target template and/or target style to automatically generate the edited video content.

15. The method according to claim 1, wherein displaying by the vehicle-mounted terminal the regional imagery and transmitting a Start Recording command containing a target campsite to both the drone shooting device and the handheld shooting device in response to a user's selection comprises:
performing, by the vehicle-mounted terminal, image analysis on the regional imagery to determine recommended camping areas suitable for camping;
displaying, by the vehicle-mounted terminal, the regional imagery and marking the recommended camping areas in the regional imagery; and
determining, by the vehicle-mounted terminal, the target campsite based on the user's selection in the regional imagery and transmitting a Start Recording command to the drone shooting device, wherein the Start Recording command comprises the target campsite.

16. A vehicle-mounted drone camping shooting system comprising a vehicle, a drone shooting device, and a handheld shooting device; wherein the vehicle is equipped with a vehicle-mounted terminal therein, and the drone shooting device and the handheld shooting device are both wirelessly connected to the vehicle-mounted terminal;
the drone shooting device is configured to capture aerial imagery of a region and transmit the captured regional imagery to the vehicle-mounted terminal;
the vehicle-mounted terminal is configured to display the regional imagery and transmit a Start Recording command to the drone shooting device and the handheld shooting device based on the user's selection, wherein the Start Recording command comprises a target campsite; and
the drone shooting device and handheld shooting device are further configured to perform multi-node coordinated capture around the target campsite.

17. The system according to claim 16, wherein the drone shooting device is further configured to fly into position and hover above the target campsite.

18. An electronic device comprising: at least one processor; and a memory communicatively coupled to the at least one processor, wherein the memory stores instructions executable by the at least one processor, and the instructions being executed by the at least one processor to enable the at least one processor to perform the steps of the method according to any one of the claims 1-15.

19. A computer-readable storage medium storing computer program/instructions, the computer program/instructions, when being executed by a processor, implement the steps of the method according to any one of the claims 1-15.

20. A computer program product comprising computer program/instructions, wherein the computer program/instructions, when executed by a processor, implement the steps of the method according to any one of the claims 1-15.
